# EUROPEAN PATENT SPECIFICATION

(11) **EP 1 411 736 B1**
(45) Date of publication and mention of the grant of the patent: **01.03.2006**
(21) Application number: 02022895.3
(22) Date of filing: 14.10.2002
(51) Int. Cl.: H04Q 7/22

(54) **System and method for converting text messages prepared with a mobile equipment into voice messages**
System und Verfahren zum Umwandeln von von einem Mobilgerät vorbereiteten Textnachrichten in Sprachnachrichten
Système et procédé de conversion de messages textuels préparés par un dispositif mobile dans des messages vocales

(43) Date of publication of application: 21.04.2004
(73) Proprietor: Swisscom AG, 3050 Bern (CH)
(72) Inventor: Van Kommer, Robert, 1752 Villars-sur-Glâne (CH); Marx, Andreas, 8037 Zürich (CH); Baessler, Felix, 3014 Bern (CH)
(74) Representative: P&TS Patents & Technology Surveys SA

(56) References cited:
- EP-A- 1 150 473
- WO-A-02/076120
- US-A1- 2002 128 025
- HASHIMOTO K ET AL: "HIGH QUALITY SYNTHETIC SPEECH GENERATION USING SYNCHRONIZED OSCILLATORS" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, vol. 76A, no. 11, 1 November 1993 (1993-11-01), pages 1949-1955, XP000420613 ISSN: 0916-8508

## Description

### Technical Field

The present invention relates to methods and systems for converting the format of messages sent from a mobile equipment, such as a mobile phone or personal digital assistant (PDA) with a communication interface.

### State of the art

Different message communication protocols have been developed which can be used by different mobile equipments to meet different communication needs. For example, many mobile phone systems support one or several text and data message protocols for sending and receiving text and/or data messages between mobile equipments. In GSM networks, SMS (Short Message System) and more recently USSD (Unstructured Supplementary Service Data), EMS (Enhanced Messaging Service) and MMS (Multimedia Messaging Service) are widely used for exchanging data and text messages.

However, text and data messages can only be delivered to receiving equipments supporting the same protocol and able to reproduce them. As a result, different types of mobile phones, mobile computers and PDAs can prepare and send messages that can only be received and displayed by a portion of the equipments used in the same network. For example, most fixed telephony systems, such as POTS (Plain Old Telephony System), ISDN (Integrated Services Digital Network) or VoIP (Voice over IP) systems, cannot transmit and reproduce very common messages such as SMS, USSD or MMS. Use of those popular communication systems is therefore mainly restricted to communication between mobile equipments. Even in a mobile telecommunication system, roaming limitations may restrict the capabilities of a mobile subscriber to send a text message to a subscriber of any other network, while not all mobile equipments support EMS or MMS messages for example. Furthermore, in many situations, reading received text and data messages on the display of portable equipment is not desirable or even dangerous - for example for car drivers.

Different methods have already been suggested for converting text messages prepared with mobile equipment in a mobile network into messages of a different, more widely accepted type. It is for example already known to convert SMS-messages into e-mail messages delivered to an e-mail address, or into fax messages delivered to a fax receiver.

A variety of so-called SMS-to-voice systems has also been developed for converting SMS text messages into voice messages delivered to blind people, among others. Many existing systems require however the recipient to use a special equipment that can make the conversion, thus extending the use of SMS to only a very small number of additional recipients. Furthermore, the messages are usually read with a very neutral voice and are therefore very unpersonal.

WO-A1-02/076120 describes a system and method for transmitting an audio message to a recipient, wherein the audio message resulting from a conversion process. Data entry means is used by a sender to enter a text-based message, either in free-from style or using a template structure, which is sent to a processing means and converted into the audio message, which may be in a voice known to the recipient with or without sound effects. The message is then sent over communications network to a recipient communications device to be heard by the recipient. The data template structure may be downloaded from the processing means to the data entry means or to recipient communications device.

US-A1-2002/0128025 discloses a method for forwarding an SMS message in a mobile communication system. A calling mobile terminal requests transmission of an SMS message to an MC (Message Center) and the MC determines that a forwarding function is set for a called mobile terminal. If it is set, the MC transmits the SMS message to a destination mobile terminal.

### Summary of the invention

It is therefore an aim of the invention to provide an improved method and system for converting text messages prepared with a mobile equipment in a mobile network into voice messages, in particular a method and system that avoid the drawbacks of the prior art methods and systems.

It is another aim of the invention to provide a method and system for converting text messages prepared with a mobile equipment in a mobile network into messages which can be received by a larger number of receiving terminals.

It is another aim of the invention to provide a method and system for converting text messages into voice messages, wherein the spoken voice message can be personalized by the sender.

In accordance with one embodiment of the present invention, those aims are achieved with a system for converting text messages prepared with a mobile equipment in a mobile network into voice messages according to preamble of claim 1, characterised in that at least some of said tags are used as parameters for selecting one or a plurality of delivery channels among different delivery channels for delivering said voice message to the recipient, the available different delivery channels comprising at least one of phone, MMS, e-mail or instant message with embedded audio file, storage of a voice mail in a webpage, VoIP and SOAP.

The aims are as well solved by a method according to the preamble of claim 23 and a mobile equipment according to the preamble of claim 25, characterised in that at least some of said tags are used as parameters for selecting one or a plurality of delivery channels among different delivery channels for delivering said voice message to the recipient, the available different delivery channels comprising at least one of phone, MMS, e-mail or instant message with embedded audio file, storage of a voice mail in a webpage, VoIP and SOAP.

In various embodiments, various tags can be embedded in the text messages for defining different parameters of the text-to-speech conversion, and for defining how the converted messages should be delivered.

Although the method of the invention could also be applied to messages which are buffered and transmitted with a delay, it has the advantage of being perfectly practicable with synchronous or quasi-synchronous messages, such as SMS, EMS, MMS or USSD, which can be converted in the infrastructure of the network without any noticeable delay into a speech message.

The invention preferably uses a dedicated server in the infrastructure of the network for converting text to speech and forwarding the converted voice message. This has the advantage that no modifications to existing message processing equipments such as the SMSC (Short Message Service Center) or to terminal equipments of the recipients are needed.

### Short description of the drawings

The invention will be better understood with the help of the description of a specific embodiment illustrated by the figures in which:
Fig. 1 illustrates the general structure of a telecommunication system including a text-to-speech converting system according to the invention.
Fig. 2 illustrates a text message including tags which can be used as parameters for the text-to-speech conversion.

### Detailed description of the invention

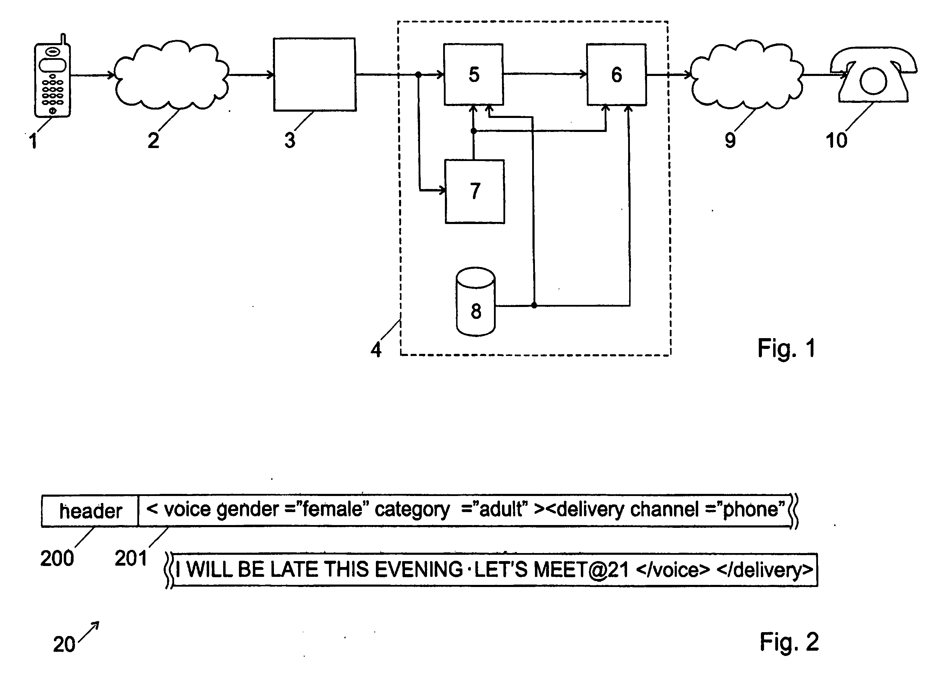

Referring to figure 1, the telecommunication system includes at least one mobile network 2 to which a plurality of mobile subscribers are connected using mobile equipments 1. At least some mobile equipment 1 include means for sending text and/or data messages to others mobile equipments in the same mobile network 2, or in a mobile network linked by a roaming agreement to said mobile network 2. In the context of a GSM, GRPS, HSCSD or Edge mobile network, the text and/or data messages which can be sent by the mobile equipments include SMS (Short Message System), USSD (Unstructured supplementary Service data), MMS (Multimedia Messaging Service), EMS (Enhanced Message Service) and, with some restrictions, e-mail messages.

The mobile network 2 includes a message processing system 3 in the infrastructure of the network for processing text and/or data messages sent by the mobile subscribers 1. Different systems may be provided in a same network for processing different types of messages sent by mobile subscribers. For example, the mobile network 2 may include one or several short message service centers (SMSC) for processing SMS, MMS and/or EMS, one USS-handler for processing USSD and one or several SMTP-servers for processing outgoing e-mails. The message processing system 3 is a standard part of the infrastructure of the mobile network 2 and is preferably centrally operated by the operator of the network 2, so that all data and/or text messages 20 sent by subscribers of the network 2 are preferably forwarded to this message processing system. In an embodiment, the message processing system 3 comprises a WEB or WAP server processing webforms filled and sent by subscribers.

The telecommunication system of the invention further includes a module 4 for converting text messages 20 forwarded by the message processing system 3 into voice messages. According to different embodiments, it may be possible to forward all messages received by the system 3 to the module 4, and/or only the messages intended for registered recipients indicated in a predefined list, and/or only messages sent to a dedicated service phone number, and/or only messages including a special tag, header, address or service code.

The module 4 preferably includes a text-to-speech converting system 5 for converting the text content of the received message into a synthesized voice message. The text-to-speech converting system 5 can be built around a conventional speech synthesizer.

The module 4 further comprises a tag interpreter for interpreting tags (labels) embedded in the received text messages 20. Those tags are for retrieving parameters of the text-to-speech conversion and of the message delivery, as will be later described. The tags are preferably readable text strings that can be entered with a normal keypad or generated by an appropriate editor. The tag interpreter may include a standard XML (eXtended Markup Language), for example a VHML (Virtual Human Markup Language) tag interpreter as defined by the VHML working Draft available since March 13, 2001 on http://www.interface.computing.edu.au/documents/VHML, or another media-keys interpreter.

A personal settings database 8 includes personal profiles of the senders and/or of the recipients 10 of transmitted messages. The profile of each user may include following parameters:
- preferred text-to-speech conversion parameters, including for example templates, etc.;
- preferred delivery parameters;
- other user settings such as, for example, billing preferences and coordinates, public cryptographic key, and so on;
- audio and/or image files which may be integrated within messages when the corresponding tag is present in the message, including for example Midi-files, musical partitions, predefined audio messages, etc.
- etc.

A WEB, WAP, SMS/MMS, IVR (Interactive Voice Response) and/or e-mail interface (not shown) is preferably provided for allowing users to change their profile in the database 8. The access is preferably secured with a secured link such as HTTPS, SSL (Secured Socket Layer), TLS (Transport Layer Security), WTLS (Wireless Transport Layer Security) for instance.

Some database fields in the user profile may also be retrieved from previously sent or received tagged messages. In a preferred embodiment, the profile of each user retains the latest parameters embedded in previously sent messages. The database 8 may also include user group profiles, for example for defining some parameters common to all employees of a company or all members of a family.

Some priority rules must be defined for specifying the behaviour of the text-to-speech conversion system when the parameters embedded in a received message are not identical, or even not consistent, with parameters of the sender and/or the recipient profile within the personal settings database 8. In a preferred embodiment, those priority rules are stored in the profile of each recipient 10, and can for example determine the following behaviours for each parameter:
- Always use the tags embedded in the message, or, if no tags are defined in the message, use the parameters included in the sender's profile.
- Use the tags embedded in the message or defined in the sender's profile only if the recipient has not defined other values for the same parameter in his profile.
- Always disregard the tags embedded in the message and/or defined by the sender, and use the recipient preferred values specified in his profile or default values if no preferences have been specified.

Default priority rules may be defined if the recipient 10 has not defined more specific rules for a parameter, or if the recipient 10 is not enrolled within the system.

A message delivery system 6 is provided in the module 4 for delivering the converted voice message synthesised by the text-to-speech conversion module 5. In an embodiment, the message delivery system 6 simply includes a voice call establishment module for automatically calling the recipient 10 indicated in the received text message 20, and speaking the converted voice message to the recipient 10 when the call has been established. The parameters embedded in the message and/or in the database 8 may define how many trials must be made when the call establishment fails, and if the sender must be informed when all the trials have failed.

According to the invention, the message delivery system 6 selects among different delivery channels 9 for delivering the synthesized voice message to the recipient 10. Possible delivery channels 9 that may be selected include:
■ Voice call over a POTS (Plain Old Telephony System), ISDN (Integrated Services Digital Network) or mobile phone network. In this case, the recipient is automatically called and the voice message delivered to him.
■ Voice call over a packet network, such as over a VoIP session.
■ MMS message including the voice message in the audio part, and possibly the text message in the text part.
■ Storing the synthesized voice message in a voice mail server, where it can be retrieved with a phone call, web session, e-mail, etc.
■ Storing the message on a web page, and notifying the recipient by another channel, e.g. via SMS, USSD, MMS, EMS, phone, e-mail, etc. The notification specifies the sender's name, time, date and the Internet address (URL) of the page from where the message can be retrieved.
■ e-mail including an embedded audio file
■ Instant message including an embedded audio file,
■ SOAP: in this case, the messages are delivered to Web services.
■ Multi-channel: simultaneous or sequential delivery over different channels.
■ etc.

The synthesized voice message is then delivered over the communication channel 9 to the recipient 10 indicated in the message of the sender.

Figure 2 illustrates an example of a text message 20 which can be sent by a sender using a mobile equipment 1 and converted by the module 4. Generally, the text message 20 includes one or several header portions 200 and a text or data portion 201. The header portion 200 indicates, for example, the type of message, the sending date, the address of the sender and of the recipient, and so on. The format of the header portion depends on the type of message sent by the sender and will not be described in more detail. The text portion 201 includes a fixed or unlimited number of positions for alphanumeric digits, in which the sender can enter text in free mode. In the case of SMS messages, the text portion 201 includes up to 160 characters which can be freely entered by the user on the keypad of the mobile equipment 1.

According to the invention, the text portion 201 of the message 20 includes one or several tags embedded in the message and which are interpreted by the tag interpreting system 7 for defining parameters of the text-to-speech conversion and of the message delivery. In the illustrated example, the text message 20 includes one first tag:
*<voice gender="female" category="adult">*
for defining the voice to be used by the speech synthesizer, and a second tag:
*<delivery channel="phone">*
that indicates that the converted voice message should be played to the recipient 10 over a phone call.

Those tags are interpreted by the tag interpreting system 7 in the infrastructure of the mobile network 2 or, possibly, in the terminal of the recipient 10, and used as parameters for the text-to-speech conversion module 5 and for the message delivery module 6.

As the tags which can be entered in the text message 20 may be difficult to learn for many users, the mobile equipment 1 (terminal) of the invention preferably uses a software application for automatically entering those tags in a text. This software application may comprise a standard XML or VHML editor. In the case of a mobile phone equipment, the software application may comprise JAVA applets in the SIM card or in the mobile equipment 1, or any other piece of software run by the operating system of the SIM card or of the mobile equipment 1. In the case of an Internet connected terminal, the application may be run on a web server providing webforms that can be filled by the user for selecting options and parameters that are automatically translated by the application into corresponding tags.

We will now describe by way of example a non-limitative list of tags that may be embedded in the text messages 20 and interpreted by the tag interpreting system 7:

### Speech conversion tags

- Selection of a predetermined voice message template, which may define a set of features for the text-to-speech conversion. A predefined template could for instance define that a voice message starts with a given jingle and continues with a given synthesized voice over a given background music. Several templates are preferably available and users can preferably define new templates and edit existing templates.
- Selection among a list of possible voices for the text-to-speech conversion. The list may include voices of famous personalities and/or the own voice of the sender of the message, who can record his voice during an enrolment session.
- Translation of the text in another language.
- Addition of music, for example an introduction jingle or background music.
- Addition of a music code, for example in a Midi format.
- Audio processing: reverberation, echo, flanging, filtering, distortion, etc.
- Addition of an image or logo to an e-mail or MMS message. The image may represent typical emotions. Predefined images may be uploaded into the database 8.
- Addition of "emotion tags" to convey typical emotion patterns to the synthesized voice. The prosody patterns may be learned by a recurrent neural network from a database of voice extracts conveying typical emotions such as, for example, anger, joy, sadness, fear, disgust, surprise, boredom, etc.
- Addition of prosody tags defining the pitch, rate, and insertion of silences in the synthesized voice.
- Addition of tags defining the type of voice style delivery: loud, whisper, slow, fast, neutral, etc.
- etc.

### Delivery tags

- Selection of a delivery channel 9: phone, MMS, e-mail, storage of a voice mail, etc.
- Sending the message to a previously entered list of recipients, etc.
- Store forward: this delivery mode allows to save the synthesized message on a server in order to listen to it via other channels or at a later time.
- Message notification mode: this allows a notification to be sent over one delivery channel while the message is simultaneously sent over another channel or stored in a web server or voice mail system for further retrieval.
- Acknowledge: The delivery of the message includes a compulsory acknowledgement from the recipient.
- Delivery date and time
- Multiparty emission mode (for example sequential ordered, sequential randomized, simultaneous, acknowledged broken, etc). For example, if a sequential ordered and acknowledged broken delivery mode is defined, the delivery of the synthesized voice message starts with the first in the list and is broken when the first recipient accepts the message.
- Delivery triggered by an external event, for example a change on a web page, a SOAP message, etc.
- Cross media delivery preferences: this setting allows a sender to send a message of a particular type, for example SMS, towards another type, for example MMS. A type preference order may be defined: for example a sender may choose to have his spoken voice message delivered by MMS if available, otherwise by e-mail if available, otherwise by phone, whereas different addresses may be given for each delivery type.
- Encryption: the message may be encrypted, for example with the public key of the recipient available in the database 8, so that only the intended recipient 10 can listen to it.
- Secure access: the sender may request from the recipient that he should identify himself to the message delivery system 6 in order to have access to the message. Different modes of identification may be required with different tags, for example using a password, a pin code, biometrical parameters and/or a smart card.
- Call over a predictive dialler system, i.e. a telephone control system that automatically calls a list of telephone numbers in sequence and screens out no-answers, busy signals, answering machines and disconnected numbers.

We will now describe an example of use of the system of the invention.

A user A of the system of the invention has created a specific account on the module 4 over an enrolment session. He has also recorded, over the web or with his phone, a number of sentences that will allow the system to make a copy of user A's voice. This voice corresponds to a specific tag that may be inserted in messages, for example in SMS messages.

User A wants to send user B a postcard for his birthday. User B is on holiday and did not take a computer with him so that he cannot receive electronic cards. It is also too late for sending a paper card. User A decides to send an acoustic postcard.

For that, user A selects an appropriate postcard, for example by surfing the Internet and visiting the website of an acoustic postcard gallery. He goes into the branch of congratulation cards and therein into the branch of birthday cards. There are 12 different birthday cards available. User A looks at the pictures and descriptions of the acoustic cards and listens to three of them. He selects one with a particular version of the "Happy Birthday" song as musical background. User A also can see that this file has a size of 68 kilobytes and a duration of 24 seconds of sound.

In the now appearing webform, user A fills his personal text portion 201 and the address of the recipient 10. He writes the following into the text field:
*"Hello B, this is A. I just wanted to say happy birthday personally*
to *you and I wish you all the best* on *your birthday! Congratulations! See*
*you. A"*

Then user A fills the first address field with user B's phone number and the second address field with user B's e-mail address. He does not know the postal address of user B's hotel and does not want to send any message to his business phone number, nor to his home phone number. Finally, A sends the acoustic card with a simple click.

The text message 20 sent over the Internet is transmitted over the message processing system 3 - in this case a web server processing webform - to the module 4. The text-to-speech module synthesizes a voice message corresponding to the text portion 201 entered by user A. As user A has not selected any specific voice or emotion for the conversion, the text-to-speech conversion module uses user A's own voice, recorded in the database 8 during the enrolment session, and adds it a neutral emotion. The text-to-speech converting system 5 also adds the selected underlaying background sound corresponding to the selected template and performs audio processing operations which may have been selected in the sender or recipient profile in the database 8.

The text-to-speech converting system 5 produces two audio files with the voice message: one as a phone-speech sound file for the phone call and a second as wav file for the e-mail attachment and storage on a website. Finally, the message delivery system 6 establishes a call connection with user B's mobile phone and possibly plays it a speech notification including a prompt for a password (if requested) and the URL to visit (if appropriate). If user B accepts the acoustic postcards and enters the correct password, the message delivery system 6 delivers the synthesized voice message. Simultaneously, it sends an e-mail to user B's e-mail address that includes the synthesized wav file as attachment and the text and/or image in the content of the e-mail. The message delivery system 6 preferably also sends a SMS notification with the entered text to user B's mobile phone.

User B then terminates the phone call by selecting an option in a voice menu or by hanging up. He may also have the opportunity to be directly connected with user A by selecting another option in a voice menu. Later on, he may log in to his mail account and listen again to the attached voice message from user A. He may also call the number indicated in the received SMS and speak the transmitted password to get connected with the module 4 and listen to the voice message once more, or go to a dedicated web page to receive the downloadable message.

### Reference numbers

- 1: Mobile equipment
- 2: Mobile network
- 20: Text message
- 200: Header portion of text message 20
- 201: Text or data portion of text message 20
- 3: Message processing system
- 4: Module
- 5: Text-to-speech converting system
- 6: Message delivery system
- 7: Tag interpreting system
- 8: Personal settings database
- 9: Delivery channel
- 10: Recipient

## Claims

1. System for converting text messages (20) received from a mobile equipment (1) in a mobile network (2) into voice messages, comprising:
a text-to-speech converting system (5) for converting the text content of said text message (20) into a voice message,
a message delivery system (6) for forwarding said voice message to an address specified by said text message (20),
with a tag interpreting system (7) for interpreting tags embedded in said text messages (20)
wherein at least some of said interpreted tags are used as parameters for the text-to-speech conversion,
**characterized in that**
at least some of said tags are used as parameters for selecting one or a plurality of delivery channels (9) among different delivery channels (9) for delivering said voice message to the recipient (10), the available different delivery channels (9) comprising at least one of phone, MMS, e-mail or instant message with embedded audio file, storage of a voice mail in a webpage, VoIP and SOAP.

2. The system of claim 1, being provided in the infrastructure of a mobile phone network for receiving text messages (20) delivered by the text message processing system (3) of said mobile network (2).

3. The system of one of the claims 1 or 2, wherein said text messages (20) include SMS, EMS or MMS.

4. The system of one of the claims 1 to 3, wherein all text messages (20) including said tags are forwarded to said tag interpreting system (7).

5. The system of one of the claims 1 to 4, wherein said tag interpreting system (7) corresponds to an address or service phone number to which all messages with that address or phone number are sent.

6. The system of one of the claims 1 to 5, wherein all text messages (20) addressed to the recipients (10) specified in a predefined list are forwarded to said tag interpreting system (7).

7. The system of one of the claims 1 to 6, further comprising a computer translation system, and wherein at least some of said tags are used as parameters for launching a computer translation of said text message (20).

8. The system of one of the claims 1 to 7, wherein at least some of said tags are used for adding a music content to said voice message.

9. The system of one of the claims 1 to 8, further comprising a database (8) in which the sender's voice can be recorded, wherein at least some of said tags are used for specifying the use of said sender's voice to said text-to-speech converting system (5).

10. The system of one of the claims 1 to 9, wherein at least some of said tags are used for adding audio effects to said speech message.

11. The system of one of the claims 1 to 10, wherein at least some of said tags are used for specifying an emotion to be conveyed to said voice message by said text-to-speech converting system (5).

12. The system of one of the claims 1 to 11, further comprising a voice message delivery system (6), and wherein at least some of said interpreted tags are used as parameters for said voice message delivery system (6).

13. The system of claim 12, wherein at least some of said tags are used as parameters for specifying the delivery time of said voice message.

14. The system of one of the claims 12 to 13, wherein at least some of said tags are used as parameters for specifying the amount of sending repetition trials of said voice message.

15. The system of one of the claims 13 or 14, wherein at least some of said tags are used as parameters for specifying a recipient list of said voice message.

16. The system of one of the claims 12 to 15, wherein at least some of said tags are used for requesting an acknowledgement from the recipient (10).

17. The system of one of the claims 1 to 16, further comprising automatic calling means for calling the recipient (10) of said message and speaking to him said voice message.

18. The system of one of the claims 1 to 17, further comprising e-mail and/or MMS and/or EMS sending means for sending an e-mail and/or MMS and/or EMS message to the recipient (10), said voice message being embedded in said e-mail and/or MMS and/or EMS.

19. The system of one of the claims 1 to 18, further comprising voice message recording means for recording said voice message into a web server and/or into a voice mail recording system.

20. The system of one of the claims 1 to 19, further comprising a preference database (8) for storing preferred parameters of said sender for the text-to-speech conversion and/or for the message delivery.

21. The system of one of the claims 1 to 20, further comprising a preference database (8) for storing preferred parameters of the recipient (10) for the text-to-speech conversion and/or for the message delivery.

22. The system of one of claims 20 or 21, further comprising a web interface for modifying said preference database (8).

23. Method for converting text messages (20) prepared with a mobile equipment (1) in a mobile network (2) into voice messages, comprising:
preparing a text or data message (20) with said mobile equipment (1),
sending said text or data message (20) to a server,
interpreting tags embedded in said text messages (20),
converting in said server the text content of said text message (20) into a voice message,
forwarding said voice message to a recipient (10),
wherein at least some of said tags are used to parameter said text-to-speech conversion,
**characterized in that**
at least some of said tags are used as parameters for selecting one or a plurality of delivery channels (9) among different delivery channels (9) for delivery said voice message, the available different delivery channels (9) comprising at least one of phone, MMS, e-mail or instant message with embedded audi file, storage of a voice mail in a webpage, VoIP and SOAP.

24. The method of claim 23, wherein at least some of said tags are used to parameter the delivery of said voice message to said recipient (10).

25. Mobile equipment (1) comprising:
an editor for automatically converting user selections into tags and for embedding those tags into text messages,
a text message (20) sending system for sending said text messages over a mobile network (2),
wherein at least some of said tags include text-to-speech conversion parameters,
**characterised in that**
at least some of said tags are used as parameters for selecting one or a plurality of delivery channels (9) among different delivery channels (9) for delivery said voice message to said recipient (10), the available different delivery channels (9) comprising at least one of phone, MMS, e-mail or instant message with embedded audio file, storage of a voice mail in a webpage, VoIP and SOAP.

## Revendications

1. Système pour convertir des messages textuels (20) reçus d'un équipement mobile (1) dans un réseau mobile (2) en des messages vocaux, comprenant:
un système de conversion de textuel en vocal (5) pour convertir le contenu textuel dudit message textuel (20) en un message vocal,
un système de distribution de messages (6) pour transférer ledit message vocal à une adresse spécifiée par ledit message textuel (20),
avec un système d'interprétation de balises (7) pour interpréter des balises incorporées dans lesdits messages textuels (20),
au moins certaines desdites balises interprétées étant utilisées comme paramètres pour la conversion de textuel en vocal,
**caractérisé en ce que**
au moins certaines desdites balises sont utilisées comme paramètres pour sélectionner un ou plusieurs canaux de distribution (9) parmi différents canaux de distribution (9) pour distribuer ledit message vocal au récepteur (10), les différents canaux de distribution (9) disponibles comprenant au moins un parmi le téléphone, le MMS, l'e-mail ou la messagerie instantanée avec fichier audio incorporé, le stockage d'un message vocal dans une page web, la VoIP et le SOAP.

2. Le système de la revendication 1, étant mis à disposition dans l'infrastructure d'un réseau téléphonique mobile pour recevoir des messages textuels (20) distribués par le système de traitement des messages textuels (3) dudit réseau mobile (2).

3. Les système d'une des revendications 1 ou 2, lesdits messages textuels (20) incluant des SMS, EMS ou MMS.

4. Le système d'une des revendications 1 à 3, tous les messages textuels (20) incluant lesdites balises étant transférés audit système d'interprétation de balises (7).

5. Le système d'une des revendications 1 à 4, ledit système d'interprétation de balises (7) correspondant à une adresse ou à un numéro de service téléphonique à laquelle tous les messages avec cette adresse ou numéro de téléphone sont envoyés.

6. Le système d'une des revendications 1 à 5, tous les messages textuels (20) adressés aux destinataires (10) spécifiés dans une liste prédéfinie étant transférés audit système d'interprétation de balises (7).

7. Le système d'une des revendications 1 à 6, comprenant en outre un système de traduction par ordinateur, et au moins certaines desdits balises étant utilisées comme paramètres pour démarrer une traduction par ordinateur dudit message textuel (20).

8. Le système d'une des revendications 1 à 7, au moins certaines desdites balises étant utilisées pour ajouter un contenu musical audit message vocal.

9. Le système d'une des revendications 1 à 8, comprenant en outre une base de données (8) dans laquelle la voix de l'émetteur peut être enregistrée, au moins certaines desdites balises étant utilisées pour spécifier l'utilisation de ladite voix de l'émetteur audit système de conversion de textuel en vocal (5).

10. Le système d'une des revendications 1 à 9, au moins certains desdites balises étant utilisées pour ajouter des effets audio audit message vocal.

11. Le système d'une des revendications 1 à 10, au moins certains desdites balises étant utilisées pour spécifier une émotion devant être transmise audit message vocal par ledit système de conversion de textuel en vocal (5).

12. Le système d'une des revendications 1 à 11, comprenant en outre un système de distribution de messages vocaux (6), et au moins certaines desdites balises interprétées étant utilisées comme paramètres pour ledit système de distribution de messages vocaux (6).

13. Le système de la revendication 12, au moins certaines desdites balises étant utilisées comme paramètres pour spécifier l'heure de distribution dudit message vocal.

14. Le système d'une des revendications 12 à 13, au moins certaines desdites balises étant utilisées comme paramètres pour spécifier le nombre d'essais de répétition de l'envoi dudit message vocal.

15. Le système d'une des revendications 13 ou 14, au moins certaines desdites balises étant utilisées comme paramètres pour spécifier une liste de destinataires dudit message vocal.

16. Le système d'une des revendications 12 à 15, au moins certaines desdites balises étant utilisées pour requérir un accusé de réception du destinataire (10).

17. Le système d'une des revendications 1 à 16, comprenant en outre des moyens d'appel automatique pour appeler le destinataire (10) dudit message et lui réciter ledit message vocal.

18. Le système d'une des revendications 1 à 17, comprenant en outre des moyens d'envoi d'e-mail et/ou de MMS et/ou d'EMS pour envoyer un message e-mail et/ou MMS et/ou EMS au destinataire (10), ledit message vocal étant incorporé dans ledit e-mail et/ou MMS et/ou EMS.

19. Le système d'une des revendications 1 à 18, comprenant en outre des moyens d'enregistrement de messages vocaux pour enregistrer ledit message vocal dans un serveur web et/ou dans un système d'enregistrement de messagerie vocale.

20. Le système d'une des revendications 1 à 19, comprenant en outre une base de données des préférences (8) pour stocker des paramètres préférentiels dudit émetteur pour la conversion de textuel en vocal et/ou pour la distribution de messages.

21. Le système d'une des revendications 1 à 20, comprenant en outre une base de données des préférences (8) pour stocker des paramètres préférentiels du destinataire (10) pour la conversion de textuel en vocal et/ou pour la distribution de messages.

22. Le système d'une des revendications 20 ou 21, comprenant en outre une interface web pour modifier ladite base de données de préférences (8).

23. Méthode pour convertir des messages textuels (20) préparés avec un équipement mobile (1) dans un réseau mobile (2) en des messages vocaux, comprenant:
préparer un message textuel ou de données (20) avec ledit équipement mobile (1),
envoyer ledit message textuel ou de données (20) à un serveur,
convertir dans ledit serveur le contenu textuel dudit message textuel (20) en un message vocal,
transférer ledit message vocal à un destinataire (10)
au moins certains desdites balises étant utilisées pour paramétrer ladite conversion de textuel en vocal,
**caractérisé en ce que**
au moins certaines desdites balises sont utilisées comme paramètres pour sélectionner un ou plusieurs canaux de distribution parmi différents canaux de distribution (9) pour la distribution dudit message vocal, les différents canaux de distribution (9) disponibles comprenant au moins un parmi le téléphone, le MMS; l'e-mail ou la messagerie instantanée avec fichier audio incorporé, le stockage d'un message vocal dans une page web, la VoIP et le SOAP.

24. La méthode de la revendication 23, au moins certaines desdites balises étant utilisées pour paramétrer la distribution dudit message vocal audit destinataire (10).

25. Equipement mobile (1) comprenant:
un éditeur pour convertir automatiquement des sélections de l'utilisateur en des balises et pour incorporer ces balises dans des messages textuels,
un système d'émission de messages textuels (20) pour envoyer lesdits messages textuels à travers un réseau mobile (2),
au moins certains desdites balises incluant des paramètres de conversion de textuel en vocal,
**caractérisé en ce que**
au moins certaines desdites balises sont utilisées pour sélectionner un ou plusieurs canaux de distribution (9) parmi différents canaux de distribution (9) pour la distribution dudit message vocal audit destinataire (10), les différents canaux de distribution (9) disponibles comprenant au moins un parmi le téléphone, le MMS, l'e-mail ou la messagerie instantanée avec fichier audio incorporé, le stockage d'un message vocal dans une page web, la VoIP et le SOAP.

## Patentansprüche

1. System, um Textmeldungen (20) empfangen von einem mobilen Gerät (1) in einem mobilen Netzwerk (2) in Sprachmeldungen umzuwandeln, enthaltend:
Ein Text-in-Sprache-Konvertierungssystem (5), um den Textinhalt der besagten Textmeldung (20) in eine Sprachmeldung umzuwandeln,
ein Meldungsauslieferungssystem (6), um die besagte Meldung an eine Adresse, die durch die besagte Textmeldung (20) spezifiziert wird, weiterzuleiten,
mit einem Taginterpretationssystem (7), um Tags, die in den besagten Textmeldungen (20) enthalten sind, zu interpretieren,
in dem mindestens einige der besagten Tags als Parameter für die Text-in-Sprache-Konvertierung verwendet werden,
**dadurch gekennzeichnet, dass**
mindestens einige der besagten Tags als Parameter verwendet werden, um einen oder eine Vielzahl von Auslieferungskanälen (9) unter verschiedenen Auslieferungskanälen zu (9) wählen, um die besagte Sprachmeldung zu dem Empfänger (10) auszuliefern, die verfügbaren verschiedenen Auslieferungskanäle (9) umfassen mindestens einen von Telefon, MMS, E-Mail oder Spontanmeldung mit einer eingebetteten Audiodatei, Speicherung einer Sprachmeldung in einer Webseite, VoIP und SOAP.

2. Das System gemäss Anspruch 1, welches in der Infrastruktur eines mobilen Telefonnetzwerkes vorhanden ist, um Textmeldungen (20) zu empfangen, die von dem durch das Textmeldungsverarbeitungssystem (3) des besagten mobilen Netzwerkes (2) ausgeliefert werden.

3. Das System gemäss Anspruch 1 oder 2, in der besagte Textmeldungen (20) SMS, EMS, oder MMS enthalten.

4. Das System gemäss einem der Ansprüche 1 bis 3, in dem alle Textmeldungen (20), welche besagte Tags enthalten, zu dem Taginterpretationssystem (7) weitergeleitet werden.

5. Das System gemäss einem der Ansprüche 1 bis 4, in welchem das besagte Taginterpretationssystem (7) zu einer Adresse oder einer Servicetelefonenummer korrespondiert, zu welcher alle Meldungen mit dieser Adresse oder dieser Telefonnummer gesendet werden.

6. Das System gemäss einem der Ansprüche 1 bis 5, in welchem alle Textmeldungen (20), welche an Empfänger (10) gerichtet sind, die in einer vordefinierten Liste angegeben sind, zu dem Taginterpretationssystem (7) weitergeleitet werden.

7. Das System gemäss einem der Ansprüche 1 bis 6, weiter umfassend ein Computerübersetzungssystem, in welchem System mindestens einige der besagten Tags verwendet werden, um eine Computerübersetzung der besagten Textmeldung (20) zu starten.

8. Das System gemäss einem der Ansprüche 1 bis 7, in welchem mindestens einige der besagten Tags verwendet werden, um Musikinhalt zu der besagten Sprachmeldung hinzuzufügen.

9. Das System gemäss einem der Ansprüche 1 bis 8, weiter umfassend eine Datenbank (8), in welcher die Sprache des Senders aufgenommen werden kann, im welchem System mindestens einige der Tags verwendet werden können, um den Gebrauch der Sprache des Senders in dem Text-in-Sprache-Konvertierungssystem (5) anzugeben.

10. Das System gemäss einem der Ansprüche 1 bis 9, in welchem mindestens einige der Tags verwendet werden, um Audioeffekte zu der besagten Sprachmeldung hinzuzufügen.

11. Das System gemäss einem der Ansprüche 1 bis 10, in welchem mindestens einige der besagten Tags verwendet werden, um eine Emotion zu spezifizieren, die zu der besagten Sprachmeldung durch das besagte Text-in-Sprache-Konvertierungssystem (5) gesendet wird.

12. Das System gemäss einem der Ansprüche 1 bis 11, weiter umfassend ein Sprachmeldungsauslieferungssystem (6), in welchem System mindestens einige der zu interpretierenden Tags als Parameter für das Sprachmeldungsauslieferungssystem (6) verwendet werden.

13. Das System gemäss Anspruch 12, in welchem mindestens einige der besagten Tags als Parameter verwendet werden, um die Auslieferungszeit der besagten Sprachmeldung anzugeben.

14. Das System gemäss einem der Ansprüche 12 bis 13, in welchem mindestens einige der besagten Tags als Parameter verwendet werden, um die Anzahl von Wiederholungsversuchen für das Senden der besagten Sprachmeldung anzugeben.

15. Das System gemäss einem der Ansprüche 13 oder 14, in welchen mindestens einige der besagten Tags als Parameter verwendet werden, um eine Liste von Empfängern der besagten Sprachmeldung anzugeben.

16. Das System gemäss einem der Ansprüche 12 bis 15, in welchem mindestens einige der Tags verwendet werden, um eine Empfangsbescheinigung von dem Empfänger (10) zu erfragen.

17. Das System gemäss einem der Ansprüche 1 bis 16, weiter umfassend automatische Anrufeinrichtungen, um den Empfänger (10) der besagten Meldung anzurufen und ihm die Sprachmeldung vorzuspielen.

18. Das System gemäss einem der Ansprüche 1 bis 17, weiter umfassend Mittel zum Senden von E-Mail und/oder MMS und/oder EMS, um eine E-Mail und/oder MMS und/oder EMS-Meldung zu dem Empfänger (10) zu senden, besagte Sprachmeldung ist in der besagten E-Mail, und/oder MMS und/oder EMS eingebettet.

19. Das System gemäss einem der Ansprüche 1 bis 18, weiter umfassend Sprachmeldungsaufnahmemittel, um die Sprachnachricht in einem Webserver und/oder in einem Sprachmailaufnahmesystem aufzunehmen.

20. Das System gemäss einem der Ansprüche 1 bis 19, weiter umfassend eine Datenbank (8) mit Präferenzen, um präferierte Parameter des besagten Senders für die Text-in-Sprache-Konvertierung und/oder für die Meldungsauslieferung zu speichern.

21. Das System Das System gemäss einem der Ansprüche 1 bis 20, weiter umfassend eine Datenbank (8) mit Präferenzen, um präferierte Parameter des Empfängers (10) für die Text-in-Sprache-Konvertierung und/oder für die Meldungsauslieferung zu speichern.

22. Das System gemäss einem der Ansprüche 20 oder 21, weiter umfassend ein Webinterface, um besagte Datenbank (8) mit Präferenzen zu modifizieren.

23. Verfahren, um Textmeldungen (20), die durch ein mobiles Gerät (1) in einem mobilen Netzwerk (2) vorbereitet worden sind, in Sprachmeldungen umzuwandeln, enthaltend:
Vorbereiten einer Text oder Datenmeldung (20) mit dem besagten mobilen Gerät (1),
Senden der besagten Text oder Datenmeldung (20) zu einem Server,
Interpretationstags, die in der besagten Textmeldung (20) eingebettet sind,
Umwandeln in dem besagten Server des Textinhalts der besagten Sprachmeldung (20) in eine Sprachmeldung,
Weiterleiten der besagten Sprachmeldung zu einem Empfänger (10),
in dem mindestens einige der besagten Tags als Parameter für die Text-in-Sprache-Konvertierung verwendet werden,
**dadurch gekennzeichnet, dass**
mindestens einige der besagten Tags als Parameter verwendet werden, um einen oder eine Vielzahl von Auslieferungskanälen (9) unter verschiedenen Auslieferungskanälen zu (9) wählen, um die besagte Sprachmeldung zu auszuliefern, die verfügbaren verschiedenen Auslieferungskanäle (9) umfassen mindestens einen von Telefon, MMS, E-Mail oder Spontanmeldung mit einer eingebetteten Audiodatei, Speicherung einer Sprachmeldung in einer Webseite, VoIP und SOAP.

24. Das Verfahren gemäss Anspruch 23, in welchem mindestens in welcher mindestens einige der besagten Tags verwendet werden, um die Auslieferung der besagten Sprachmeldung zu dem besagten Empfänger (10) zu parametrisieren.

25. Mobiles Gerät (1), umfassend:
einen Editor, um die Auswahl eines Benutzers in Tags umzuwandeln und um diese Tags in Textmeldungen einzubetten,
ein System zum Senden von Textmeldungen (20), um besagte Textmeldungen über ein mobiles Netzwerk (2) zu senden,
in dem mindestens einige der besagten Tags als Parameter für die Text-in-Sprache-Konvertierung verwendet werden,
**dadurch gekennzeichnet, dass**
mindestens einige der besagten Tags als Parameter verwendet werden, um einen oder eine Vielzahl von Auslieferungskanälen (9) unter verschiedenen Auslieferungskanälen zu (9) wählen, um die besagte Sprachmeldung zu dem Empfänger (10) auszuliefern, die verfügbaren verschiedenen Auslieferungskanäle (9) umfassen mindestens einen von Telefon, MMS, E-Mail oder Spontanmeldung mit einer eingebetteten Audiodatei, Speicherung einer Sprachmeldung in einer Webseite, VoIP und SOAP.
